# EUROPÄISCHE PATENTANMELDUNG

(11) **EP 1 767 401 A2**
(43) Veröffentlichungstag der Anmeldung: **28.03.2007**
(21) Anmeldenummer: 06120202.4
(22) Anmeldetag: 06.09.2006
(51) Int. Cl.: B60Q 1/14

(54) **Fahrzeugbeleuchtungsanlage**

(30) Priorität: 21.09.2005 DE 102005045866
(71) Anmelder: ROBERT BOSCH GMBH, 70442 Stuttgart (DE); GM Global Technology Operations, Inc., Detroit, MI 48265-3000 (US)
(72) Erfinder: Meier, Hans, 77833, Ottersweier (DE); Blitzke, Henry, 77815, Buehl (DE); Melchior, Holger, 64569, Nauheim (DE)
(74) Vertreter: Grosse, Rainer

(57) **Zusammenfassung**

Die Erfindung betrifft eine Fahrzeugbeleuchtungsanlage, mit mindestens einem Scheinwerfer (4, 6), Sensoren (10, 8) zur Messung einer Umgebungshelligkeit und einer Fahrtgeschwindigkeit des Fahrzeugs, sowie einer Einrichtung (16) zur Steuerung des Beleuchtungszustands der Scheinwerfer (4, 6) in Abhängigkeit von der Umgebungshelligkeit und von der Fahrtgeschwindigkeit. Es ist vorgesehen, dass die Steuereinrichtung (16) die Scheinwerfer (4, 6) mit Abblendlichtverteilung einschaltet, wenn die gemessene Umgebungshelligkeit einen vorbestimmten unteren Grenzwert unterschreitet, wobei der untere Grenzwert von der Fahrtgeschwindigkeit abhängig ist.

## Beschreibung

Die Erfindung betrifft eine Fahrzeugbeleuchtungsanlage gemäß dem Oberbegriff des Anspruchs 1.

### Stand der Technik

Aus der DE 199 11 901 A1 ist eine Fahrzeugbeleuchtungsanlage dieser Art mit fahrsituationsabhängiger Beleuchtungssteuerung bekannt, bei der eine Steuereinheit von einer Fahrsituationssensorik Informationen über die momentane Fahrtgeschwindigkeit des Fahrzeugs und/oder die Umgebungshelligkeit erhält und in Abhängigkeit von einer dadurch festgestellten Fahrsituation einen Scheinwerfer des Fahrzeugs beispielsweise so ansteuert, dass sich für den Fahrer die bestmögliche Ausleuchtung der vorausliegenden Fahrbahn ergibt. Da sich die bestmögliche Ausleuchtung der Fahrbahn jedoch zumeist mit eingeschalteten Scheinwerfern ergibt, führt dies dazu, dass diese in der Regel eingeschaltet sein werden.

Weiter ist aus der DE 101 28 995 A1 bereits ein Verfahren und eine Vorrichtung zur automatischen Steuerung von Beleuchtungseinrichtungen eines Fahrzeugs bekannt, wobei durch mindestens einen Richtungssensor die Umgebungshelligkeit in einer bestimmten Richtung erfasst wird und die Beleuchtungseinrichtungen nach Ablauf einer Mindestzeit eingeschaltet werden, die beginnt, wenn die Richtungssignale eine Einschaltschwelle überschreiten bzw. unterschreiten und während der gesamten Mindestzeit über- bzw. unterhalb der Einschaltschwelle liegen. Bei der Bestimmung der Mindestzeit kann dort die durch einen Globalsensor erfasste Umgebungshelligkeit bzw. die Fahrtgeschwindigkeit des Fahrzeugs berücksichtigt werden, so dass die Mindestzeit in der Dämmerungsphase bzw. bei hoher Geschwindigkeit kürzer ist.

### Vorteile der Erfindung

Die erfindungsgemäße Fahrzeugbeleuchtungsanlage mit den im Anspruch 1 genannten Merkmalen bietet demgegenüber den Vorteil, dass das Licht bei hohen Fahrtgeschwindigkeiten, zum Beispiel bei Fahrten auf der Autobahn, früher, das heißt bereits bei einer größeren Umgebungshelligkeit eingeschaltet werden kann, wodurch das Fahrzeug bei höheren Fahrtgeschwindigkeiten für andere Verkehrsteilnehmer früher bzw. leichter sichtbar wird, was eine Erhöhung der Sicherheit zur Folge hat. Auf der anderen Seite ist es dann möglich, die Scheinwerfer bei niedrigeren Fahrtgeschwindigkeiten, zum Beispiel bei Fahrten auf Landstraßen oder im Stadtverkehr später, das heißt erst bei einer geringeren Umgebungshelligkeit einschalten, wodurch ohne merkliche Beeinträchtigung der Sicherheit ein geringerer Kraftstoffverbrauch erzielt werden kann.

Eine Abblendlichtsteuerung, die ein früheres Einschalten des Abblendlichts bei höheren Fahrtgeschwindigkeiten ermöglicht, ist gemäß einer bevorzugten Ausgestaltung der Erfindung so ausgebildet, dass eine zur Steuerung des Beleuchtungszustands der Scheinwerfer in Abhängigkeit von der Umgebungshelligkeit und der Fahrtgeschwindigkeit dienende Steuereinrichtung den unteren Grenzwert erhöht, wenn die Fahrtgeschwindigkeit des Fahrzeugs eine zuvor festgelegte Aktivierungsgeschwindigkeit übersteigt, bei der eine Steigerung der Empfindlichkeit der Abblendlichtsteuerung erwünscht ist, und den unteren Grenzwert wieder herabsetzt, wenn die Fahrtgeschwindigkeit eine ebenfalls zuvor festgelegte Deaktivierungsgeschwindigkeit unterschreitet. Um "Blicklichteffekte", d. h. ein Ein- und Ausschalten der Scheinwerfer in kurzen Zeitabständen, zu vermeiden, liegt die Aktivierungsgeschwindigkeit vorzugsweise um ein gewisses Maß über der Deaktivierungsgeschwindigkeit, so das die beiden Geschwindigkeiten durch ein "Hystereseband" getrennt sind.

Aus dem gleichen Grund ist vorzugsweise auch vorgesehen, dass die Steuereinrichtung die Scheinwerfer nicht sofort nach dem Überschreiten der Aktivierungsgeschwindigkeit einschaltet, sondern erst dann, wenn die Aktivierungsgeschwindigkeit über einen festgelegten Zeitraum ununterbrochen überschritten wird.

Um zu erreichen, dass zum einen die höhere Empfindlichkeit im Wesentlichen nur bei Autobahnfahrten zum Tragen kommt, und dass zum anderen nach dem Abfahren von der Autobahn möglichst bald wieder auf geringere Empfindlichkeit umgeschaltet wird, sieht eine weitere bevorzugte Ausgestaltung der Erfindung vor, dass die Aktivierungsgeschwindigkeit etwa 120 km/h und die Deaktivierungsgeschwindigkeit etwa 80 km/h beträgt.

Während der untere Grenzwert der Umgebungshelligkeit bei hohen Fahrtgeschwindigkeiten, das heißt oberhalb der Aktivierungsgeschwindigkeit, etwa 5000 Lux beträgt, liegt er unterhalb dieser Geschwindigkeit zweckmäßig bei nur etwa 1200 Lux, so dass das Abblendlicht erst erheblich später eingeschaltet wird.

Das Ausschalten der Scheinwerfer erfolgt ebenfalls bei unterschiedlichen, von der Fahrtgeschwindigkeit abhängigen Grenzwerten, wobei dieser obere Grenzwert bei hohen Fahrtgeschwindigkeiten vorzugsweise etwa 15000 Lux und bei niedrigen Fahrtgeschwindigkeiten vorzugsweise etwa 3400 Lux beträgt und zum Ausschalten der Scheinwerfer führt, wenn die Umgebungshelligkeit diesen Grenzwert übersteigt.

Da sich bei Erprobungsfahrten gezeigt hat, dass das Umgebungslicht insbesondere im Bereich des oberen Grenzwerts für niedrige Fahrtgeschwindigkeiten häufig großen Helligkeitsschwankungen unterliegt, zum Beispiel beim Hindurchfahren unter Brücken oder Alleebäumen, sieht eine weitere bevorzugte Ausgestaltung der Erfindung vor, dass die Scheinwerfer erst dann ausgeschaltet werden, wenn der obere Grenzwert während einer vorbestimmten Verzögerungszeit nicht wieder unterschritten wird. Die Steuereinrichtung umfasst zu diesem Zweck vorzugsweise einen Ausschaltverzögerungszähler, der bei jeder Unterschreitung des oberen Grenzwerts vor Ablauf der Verzögerungszeit wieder auf Null zurückgesetzt wird.

Weiter hat sich herausgestellt, dass es insbesondere für diese Situation sinnvoll ist, nicht die aktuell vom Helligkeitssensor gemessenen Helligkeitswerte mit dem Grenzwert zu vergleichen, sondern einen Mittelwert, der zum Beispiel als arithmetisches Mittel aus den während eines Zeitraums von mehr als 2 Sekunden gemessenen Helligkeitswerten gebildet wird.

### Zeichnung

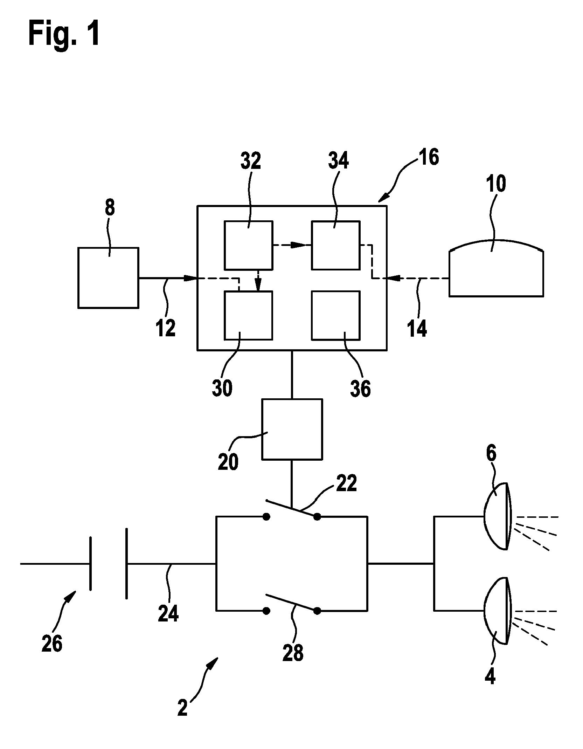

Die Erfindung wird nachfolgend in einem Ausführungsbeispiel anhand der zugehörigen Zeichnung näher erläutert. Die einzige Figur zeigt eine schematische Darstellung einer Abblendlichtsteuerung einer Beleuchtungsanlage eines Kraftfahrzeugs.

### Beschreibung des Ausführungsbeispiels

Die in der Zeichnung dargestellte Abblendlichtsteuerung 2 für zwei Scheinwerfer 4, 6 einer Beleuchtungsanlage eines Kraftfahrzeugs besteht im Wesentlichen aus zwei Sensoren 8, 10, nämlich einem Geschwindigkeitssensor 8 zur Ermittlung der Fahrtgeschwindigkeit des Fahrzeugs und einem Umgebungs- oder Globalhelligkeitssensor 10 zur Messung der Lichtstärke oder Helligkeit in der Umgebung des Fahrzeugs, sowie einer durch Signalleitungen 12, 14 mit den Sensoren 8, 10 verbundenen Steuereinheit 16, die in Abhängigkeit von der vom Geschwindigkeitssensor 8 gemessenen Fahrtgeschwindigkeit und der vom Helligkeitssensor 10 gemessenen Umgebungshelligkeit über eine Signalleitung 18 ein elektromagnetisches Stellglied 20 eines Schalters 22 ansteuert, das den in einer Leitung 24 zwischen der Fahrzeugbatterie 26 und den Scheinwerfern 4, 6 angeordneten Schalter 22 betätigt.

Der zur Messung der Fahrtgeschwindigkeit dienende Geschwindigkeitssensor 8 kann ein bereits zu anderen Zwecken als zur Steuerung der Beleuchtungsanlage im Kraftfahrzeug eingebauter Fahrtgeschwindigkeitsmesser sein.

Der Helligkeitssensor 10 kann ein Sensor zur Messung der Umgebungshelligkeit eines Kraftfahrzeugs sein, wie er zum Beispiel in der DE 197 04 818 A1 zur Ansteuerung einer Beleuchtungsanlage eine Kraftfahrzeugs beschrieben ist, und soll daher an dieser Stelle nicht näher erläutert werden.

Der Schalter 22 ist mit einem Lichtschalter 28 parallel geschaltet, der im Bereich der Instrumententafel des Kraftfahrzeugs angebracht ist und ein manuelles Ein- bzw. Ausschalten des Abblendlichts der Scheinwerfer 4, 6 durch den Fahrer desselben gestattet.

Die Steuereinheit 16 kann eine getrennte Steuereinheit für die Abblendlichtsteuerung bzw. für die Beleuchtungsanlage des Kraftfahrzeugs sein, bildet jedoch vorzugsweise einen Teil von dessen Bordcomputer. Die Steuereinheit 16 umfasst ein Vergleichsglied 30, das die vom Geschwindigkeitssensor 8 übermittelte Fahrtgeschwindigkeit in kurzen Zeitabständen mit zwei in einem Speicher 32 gespeicherten Geschwindigkeitswerten vergleicht, nämlich einer Aktivierungsgeschwindigkeit von 120 km/h, die bei der Aktivierung der Abblendlichtsteuerung verwendet wird, und einer Deaktivierungsgeschwindigkeit von 80 km/h, die bei der Deaktivierung der Abblendlichtsteuerung verwendet wird, wie nachfolgend beschrieben wird. Die Steuereinheit 16 umfasst ein weiteres Vergleichsglied 34, das die vom Helligkeitssensor 10 übermittelte Umgebungshelligkeit oder eine aus diesen Umgebungshelligkeiten über einen Zeitraum von mehr als 2 Sekunden gemittelte Umgebungshelligkeit mit jeweils zwei fahrtgeschwindigkeitsabhängigen, im Speicher 32 gespeicherten Grenzwerten vergleicht, und zwar mit einem unteren Grenzwert von etwa 1200 Lux für niedrige bzw. von 5000 Lux für hohe Fahrtgeschwindigkeiten sowie mit einem oberen Grenzwert von etwa 3400 Lux für niedrige bzw. von etwa 15000 Lux für hohe Fahrtgeschwindigkeiten. Die Steuereinheit 16 umfasst weiter einen Ausschaltverzögerungszähler 36, dessen Funktionsweise nachfolgend erläutert wird.

Solange nach einer Inbetriebnahme des Kraftfahrzeugs dessen Fahrtgeschwindigkeit die Aktivierungsgeschwindigkeit von 120 km/h nicht übersteigt, schaltet die Steuereinheit 16 die Scheinwerfer 4, 6 mit Abblendlicht selbsttätig ein, wenn die vom Helligkeitssensor gemessene Umgebungshelligkeit oder ggf. ein von der Steuereinheit 16 aus mehreren Messwerten gebildeter Mittelwert, unterhalb des unteren Grenzwerts von 1200 Lux für niedrige Fahrtgeschwindigkeiten liegt oder während der Fahrt unter diesen Grenzwert absinkt. Solange anschließend die Fahrtgeschwindigkeit die Aktivierungsgeschwindigkeit von 120 km/h nicht übersteigt, wird das Abblendlicht der Scheinwerfer 4, 6 von der Steuereinheit 16 immer dann ausgeschaltet, wenn die Umgebungshelligkeit den oberen Grenzwert von etwa 3400 Lux für niedrige Fahrtgeschwindigkeiten über einen vorbestimmten Zeitraum ohne Unterbrechungen übersteigt. Zu diesem Zweck ist der Ausschaltverzögerungszähler 36 vorgesehen, der das Abblendlicht erst mit einer Zeitverzögerung von zum Beispiel 2 Sekunden nach dem Überschreiten des oberen Grenzwerts von etwa 3400 Lux ausschaltet und der bei jeder kurzzeitigen Unterschreitung des oberen Grenzwertes vor Ablauf der Verzögerungszeit auf Null zurückgesetzt wird, so dass die Verzögerungszeit erneut zu laufen beginnt. Dadurch kann vermieden werden, dass die Scheinwerfer 4, 6 in kurzen Zeitabständen aus- und eingeschaltet werden, wenn das Fahrzeug zum Beispiel über eine baumbestandene Allee mit abwechselnder Sonneneinstrahlung und Schattenwurf fährt. Zur Vermeidung von Blinkeffekten trägt auch bei, wenn die vom Helligkeitssensor 10 gemessenen und an die Steuereinheit 16 übermittelten Helligkeitswerte von der Steuereinheit über einen gewissen Zeitraum gemittelt werden, wie bereits beschrieben, und anstelle des vom Helligkeitssensor 10 aktuell gemessenen Helligkeitswerts zum Vergleich mit dem oberen Grenzwerts von etwa 3400 Lux herangezogen werden.

Wenn die Fahrtgeschwindigkeit die Aktivierungsgeschwindigkeit von 120 km/h über einen vorgegebenen Zeitraum übersteigt, schaltet die Steuereinheit 16 das Abblendlicht ein, wenn die vom Helligkeitssensor 10 gemessene Umgebungshelligkeit beim Überschreiten der Aktivierungsgeschwindigkeit unterhalb des unteren Grenzwerts von 5000 Lux für hohe Fahrtgeschwindigkeiten liegt oder zu einem späteren Zeitpunkt unter diesen Grenzwert absinkt. Indem das Abblendlicht bei Fahrtgeschwindigkeiten über 120 km/h bereits bei größerer Umgebungshelligkeit eingeschaltet wird, das heißt mit anderen Worten die Einschaltschwelle im Vergleich zu niedrigeren Fahrtgeschwindigkeiten herabgesetzt wird, kann insbesondere bei Autobahnfahrten für eine bessere Sichtbarkeit und damit für eine größere Sicherheit gesorgt werden.

Solange die Fahrtgeschwindigkeit des Fahrzeugs anschließend oberhalb der Deaktivierungsgeschwindigkeit von 80 km/h bleibt, werden die Scheinwerfer 4, 6 von der Steuereinheit 16 nur dann ausgeschaltet, wenn die vom Helligkeitssensor 10 ermittelte Umgebungshelligkeit den oberen Grenzwert von etwa 15000 Lux für hohe Fahrtgeschwindigkeiten übersteigt.

Wenn die Fahrtgeschwindigkeit des Fahrzeugs unter die Deaktivierungsgeschwindigkeit von 80 km/h absinkt, bleibt das Abblendlicht eingeschaltet, sofern zu diesem Zeitpunkt die vom Helligkeitssensor 10 gemessene Umgebungshelligkeit unterhalb des oberen Grenzwerts von etwa 3400 Lux für niedrige Fahrtgeschwindigkeiten liegt. Sofern die Umgebungshelligkeit hingegen diesen oberen Grenzwert von etwa 3400 Lux übersteigt, wird das Abblendlicht ausgeschaltet, wenn dieser Zustand ohne Unterbrechung über die am Ausschaltverzögerungszähler 36 eingestellte vorbestimmte Verzögerungszeit anhält, wie oben bereits beschrieben wurde.

Die am Ausschaltverzögerungszähler 36 eingestellte vorbestimmte Verzögerungszeit von 2 Sekunden ist andererseits so gewählt, dass das Abblendlicht beim Abfahren von der Autobahn auf eine Landstraße infolge der Geschwindigkeitsreduzierung bereits beim Erreichen der Landstraße zum Abschalten der Scheinwerfer 4, 6 führt, sofern im Bereich der gesamten Ausfahrt die Umgebungshelligkeit über dem oberen Grenzwert von etwa 3400 Lux für niedrige Fahrtgeschwindigkeiten liegt.

Die Differenz von 40 km/h zwischen der oben angegebenen Aktivierungsgeschwindigkeit von 120 km/h und der ebenfalls oben angegebenen Deaktivierungsgeschwindigkeit von 80 km/h kann als "Hystereseband" angesehen werden, mit dessen Hilfe in ähnlicher Weise wie mit Hilfe der Ausschaltverzögerung "Blinklichteffekte" verhindert werden können, die ohne dieses "Hystereseband" durch Schwankungen der Fahrtgeschwindigkeit um einen Wert von 120 km/h infolge der unterschiedlichen unteren Grenzwerte von 1200 bzw. 5000 Lux unterhalb und oberhalb dieser Aktivierungsgeschwindigkeit verursacht würden.

Für den Fall, dass die Abblendlichtsteuerung 2 mit einer Scheibenwischersteuerung (nicht dargestellt) gekoppelt ist, um sicherzustellen, dass das Abblendlicht beim Dauerwischen immer eingeschaltet bleibt, ist die Abblendlichtsteuerung 2 so ausgelegt, dass ein während des Dauerwischens von der Scheibenwischersteuerung zugeführtes Signal eine Abschaltung des Abblendlichts auch dann verhindert, wenn die Umgebungshelligkeit bei Fahrtgeschwindigkeiten über 120 km/h den oberen Grenzwert von etwa 5000 Lux und bei Fahrtgeschwindigkeiten unter 120 km/h bzw. unter 80 km/h den oberen Grenzwert von 3400 Lux übersteigt, was jedoch vermutlich nicht sehr oft der Fall sein wird.

## Patentansprüche

1. Fahrzeugbeleuchtungsanlage, mit mindestens einem Scheinwerfer, Sensoren zur Messung einer Umgebungshelligkeit und einer Fahrtgeschwindigkeit des Fahrzeugs, sowie mit einer Einrichtung zur Steuerung des Beleuchtungszustands der Scheinwerfer in Abhängigkeit von der Umgebungshelligkeit und von der Fahrtgeschwindigkeit, **dadurch gekennzeichnet, dass** die Steuereinrichtung (16) die Scheinwerfer (4, 6) mit Abblendlichtverteilung einschaltet, wenn die gemessene Umgebungshelligkeit einen vorbestimmten unteren Grenzwert unterschreitet, wobei der untere Grenzwert von der Fahrtgeschwindigkeit abhängig ist.

2. Fahrzeugbeleuchtungsanlage nach Anspruch 1, **dadurch gekennzeichnet, dass** der untere Grenzwert bei hohen Fahrtgeschwindigkeiten höher als bei niedrigen Fahrtgeschwindigkeiten ist.

3. Fahrzeugbeleuchtungsanlage nach Anspruch 1 oder 2, **dadurch gekennzeichnet, dass** der untere Grenzwert bei hohen Fahrtgeschwindigkeiten etwa 5000 Lux und bei niedrigen Fahrtgeschwindigkeiten etwa 1200 Lux beträgt.

4. Fahrzeugbeleuchtungsanlage nach einem der vorangehenden Ansprüche, **dadurch gekennzeichnet, dass** die Steuereinrichtung (16) den unteren Grenzwert beim Überschreiten einer Aktivierungsgeschwindigkeit erhöht und beim Unterschreiten einer Deaktivierungsgeschwindigkeit herabsetzt, wobei die Aktivierungsgeschwindigkeit die Deaktivierungsgeschwindigkeit um ein gewisses Maß übersteigt.

5. Fahrzeugbeleuchtungsanlage nach Anspruch 4, **dadurch gekennzeichnet, dass** die Steuereinrichtung (16) den unteren Grenzwert erhöht, wenn die Aktivierungsgeschwindigkeit über einen festgelegten Zeitraum ununterbrochen überschritten wird.

6. Fahrzeugbeleuchtungsanlage nach Anspruch 4 oder 5, **dadurch gekennzeichnet, dass** die Aktivierungsgeschwindigkeit etwa 120 km/h und die Deaktivierungsgeschwindigkeit etwa 80 km/h beträgt.

7. Fahrzeugbeleuchtungsanlage nach einem der vorangehenden Ansprüche, **dadurch gekennzeichnet, dass** die Steuereinrichtung (16) die Scheinwerfer (4, 6) ausschaltet, wenn die gemessene Umgebungshelligkeit einen vorbestimmten oberen Grenzwert übersteigt.

8. Fahrzeugbeleuchtungsanlage nach Anspruch 7, **dadurch gekennzeichnet, dass** der obere Grenzwert von der Fahrtgeschwindigkeit abhängig ist.

9. Fahrzeugbeleuchtungsanlage nach Anspruch 7 oder 8, **dadurch gekennzeichnet, dass** der obere Grenzwert bei hohen Fahrtgeschwindigkeiten etwa 15000 Lux und bei niedrigen Fahrtgeschwindigkeiten etwa 3400 Lux beträgt.

10. Fahrzeugbeleuchtungsanlage nach einem der Ansprüche 7 bis 9, **dadurch gekennzeichnet, dass** die Steuereinrichtung (16) die Scheinwerfer ausschaltet, wenn der obere Grenzwert vor Ablauf einer festgelegten Verzögerungszeit nicht wieder unterschritten wird.

11. Fahrzeugbeleuchtungsanlage nach einem der Ansprüche 7 bis 10, **dadurch gekennzeichnet, dass** die Steuereinrichtung (16) einen Ausschaltverzögerungszähler (36) umfasst, der bei einer Unterschreitung des oberen Grenzwerts zurückgesetzt wird.
